Europäisches Patentamt

(19) European Patent Office

Office européen des brevets

(11) Numéro de publication : **0 295 182 B1**

(12) **FASCICULE DE BREVET EUROPEEN**

(45) Date de publication du fascicule du brevet :
**17.04.91 Bulletin 91/16**

(51) Int. Cl.⁵ : **F28B 5/00**, B01D 1/26, B01D 5/00

(21) Numéro de dépôt : **88401398.8**

(22) Date de dépôt : **08.06.88**

(54) **Procédé de condensation d'une vapeur, dispositif pour sa mise en oeuvre et évaporateur comprenant un tel dispositif.**

(30) Priorité : **10.06.87 FR 8708063**

(43) Date de publication de la demande :
**14.12.88 Bulletin 88/50**

(45) Mention de la délivrance du brevet :
**17.04.91 Bulletin 91/16**

(84) Etats contractants désignés :
**AT BE CH DE ES GB GR IT LI LU NL SE**

(56) Documents cités :
**EP-A- 0 193 206
DE-C- 543 372
FR-A- 466 496**

(56) Documents cités :
**FR-A- 2 178 804
FR-A- 2 570 285
FR-A- 2 583 651
US-A- 2 944 966**

(73) Titulaire : **LAGUILHARRE S.A.
2, avenue du 18 Juin 1940
F-92500 Rueil Malmaison (FR)**

(72) Inventeur : **Parent, Jean-Pierre
20, rue Georges Clémenceau
F-91400 Orsay (FR)**

(74) Mandataire : **Kedinger, Jean-Paul et al
c/o Cabinet Malemont 42, avenue du Président Wilson
F-75116 Paris (FR)**

## Description

Procédé de condensation d'une vapeur, dispositif pour sa mise en oeuvre et évaporateur comprenant un tel dispositif

La présente invention a pour objet un procédé de condensation d'une vapeur comprenant, outre d'éventuels incondensables, au moins deux constituants ayant des températures de condensation différentes à la pression de condensation considérée, tels que l'eau et l'éthanol, ce procédé consistant à faire circuler la vapeur en continu à travers une zone de condensation et à réaliser dans cette zone un échange thermique indirect entre cette vapeur et au moins un fluide de condensation ; elle a également pour objet un dispositif pour la mise en oeuvre de ce procédé et un évaporateur comprenant un tel dispositif.

Les procédés connus de ce type, s'ils sont bien adaptés à la condensation d'une vapeur ne comprenant qu'un seul constituant, sont toutefois mal adaptés à la condensation d'une vapeur comprenant plusieurs constituants ayant des températures de condensation différentes.

En effet, lorsque dans ces procédés connus, la vapeur à condenser comprend un mélange de tels constituants (par exemple vapeur d'eau et vapeur d'éthanol), cette vapeur s'enrichit au fur et à mesure de son déplacement dans la zone de condensation, c'est-à-dire de sa condensation dans cette zone, en constituant ayant la température de condensation la plus faible (éthanol). Il s'ensuit un abaissement progressif de la température de condensation de la vapeur au cours de son trajet dans la zone de condensation. Cet abaissement conduit à une diminution de l'écart entre la température de condensation et la température du fluide de condensation et, partant, à une diminution de transfert de calories et donc à une diminution du taux de condensation de la vapeur par unité de surface d'échange. Pour aboutir à une condensation efficace, il est de ce fait nécessaire de surdimensionner le dispositif où ces procédés sont mis en oeuvre ce qui est peu économique.

La présente invention a pour but de remédier à cet inconvénient et pour ce faire, elle propose un procédé conforme à celui défini au premier paragraphe de cette description et qui se caractérise en ce qu'il consiste en outre à introduire et extraire en continu un liquide dans la zone de condensation de manière à ce que ladite vapeur soit amenée au contact de ce liquide dans une partie au moins de ladite zone, ce dernier étant miscible avec les condensats générés par la condensation de la vapeur et possédant, à la pression de condensation considérée, une température d'ébullition supérieure à la température de condensation la plus basse que possède la vapeur dans ladite zone de condensation en l'absence dudit liquide, pour élever la température de condensation de la vapeur sur une partie au moins du trajet de cette vapeur dans la zone de condensation. En procédant ainsi, on parvient à relever le profil des températures de condensation de la vapeur au sein de ladite zone ; on dispose ainsi d'une température de condensation sensiblement constante dans cette zone et sensiblement égale à la température de condensation que possède cette vapeur au moment de son entrée dans la zone de condensation. Il en résulte, à surface d'échange égale, une condensation beaucoup plus efficace.

Le liquide pourra par exemple être constitué par l'un des constituants de la vapeur à condenser dont la température d'ébullition répond à la condition susmentionnée ; il pourra en particulier être de même nature que le constituant de la vapeur à condenser ayant la température de condensation la plus élevée.

En variante, ce liquide pourra comprendre les mêmes constituants que la vapeur à condenser, la teneur de ces constituants dans le liquide étant telle que ce dernier possède, à la pression de condensation considérée, une température d'ébullition supérieure à la température de condensation la plus basse que possède la vapeur dans ladite zone de condensation en l'absence dudit liquide.

Selon l'invention, il est possible de faire circuler la vapeur, sur une partie au moins de son trajet dans la zone de condensation, à contre-courant par rapport aux condensats générés par sa condensation, auquel cas le liquide peut avantageusement être constitué par tout ou sortie des condensats présents en un point quelconque de la zone de condensation situé à un niveau inférieur au point d'introduction du liquide dans cette zone.

On préfère cependant faire circuler la vapeur, sur une partie au moins de son trajet dans la zone de condensation, dans le sens de cheminement des condensats générés par sa condensation. Ceci évite l'apparition d'un phénomène de distillation de ces condensats qui se produit lorsqu'il y a circulation à contre-courant et qui conduit, notamment en partie haute de la zone de condensation, à une augmentation de la concentration des constituants de plus faible température de condensation, augmentation à l'origine d'une réduction des performances de condensation. Dans ce cas de circulation à co-courant de la vapeur par rapport aux condensats, la température d'ébullition du liquide sera de préférence égale ou supérieure à la température de condensation que possède la vapeur au point d'introduction du liquide dans la zone de condensation ; de cette manière, le liquide exercera son effet d'élévation de la température de condensation sur la vapeur présente dans toute la partie de la zone de condensation, située au-dessous de ce point d'introduction.

Le dispositif de condensation pour la mise en oeuvre du procédé ci-dessus, qui comprend de manière connue en soi, une enceinte unique ou plusieurs enceintes en série, chaque enceinte comportant (i) une arrivée de vapeur à condenser, (ii) une sortie de gaz et (iii) au moins un circuit de fluide de condensation en relation d'échange thermique indirect avec la vapeur à condenser, la sortie de gaz de chacune des enceintes en série, à l'exception de la dernière, étant en communication avec l'arrivée de vapeur à condenser de l'enceinte suivante, se caractérise en ce que l'enceinte unique ou l'une au moins des enceintes en série est pourvue d'au moins une arrivée d'un liquide tel que défini ci-dessus et d'une sortie pour ce liquide et les condensats destinés à se former dans l'enceinte considérée, les positions respectives de cette arrivée et de cette sortie étant telles que ledit liquide soit amené au contact de la vapeur à condenser dans une partie au moins de l'enceinte considérée.

L'arrivée de liquide est de préférence disposée dans un plan situé au-dessus du plan dans lequel est disposée la sortie pour le liquide et les condensats de l'enceinte considérée.

Par ailleurs, selon une première variante, l'arrivée de vapeur à condenser de l'enceinte unique ou de l'une au moins des enceintes en série est disposée dans un plan situé en-dessous du plan dans lequel est disposée la sortie de gaz de l'enceinte considérée, la sortie pour le liquide et les condensats de l'enceinte unique ou de l'une au moins des enceintes en série étant alors de préférence reliée à l'arrivée de liquide de l'enceinte considérée par l'intermédiaire éventuel de moyens de mise en circulation du liquide.

Selon une seconde variante, l'arrivée de vapeur à condenser de l'enceinte unique ou de l'une au moins des enceintes en série est disposée dans un plan situé au-dessus du plan dans lequel est disposée la sortie de gaz de l'enceinte considérée.

Selon une troisième variante, les positions respectives de l'arrivée de vapeur à condenser et de la sortie de gaz sont telles que, dans l'enceinte unique ou l'une au moins des enceintes en série, le courant de vapeur à condenser et celui du liquide sont croisés.

Si, dans cette troisième variante, l'enceinte unique ou l'une au moins des enceintes en série comprend plusieurs circuits de fluide de condensation, ces circuits pourront être disposés successivement sur le trajet de la vapeur à condenser dans l'enceinte considérée.

Bien entendu, l'invention couvre également le cas où le dispositif comprend plusieurs enceintes dont une partie est conforme à la première variante, une partie est conforme à la seconde variante et une partie est conforme à la troisième variante.

Lorsque le dispositif selon l'invention comprend plusieurs enceintes en série, la sortie pour le liquide et les condensats de l'une au moins des enceintes, à l'exception de la dernière, peut être en communication avec l'arrivée de liquide de l'une au moins des enceintes suivantes par l'intermédiaire éventuel de moyens de mise en circulation du liquide.

En outre, l'enceinte unique ou l'une au moins des enceintes en série pourvues de ladite arrivée de liquide et de ladite sortie pour le liquide et les condensats, comprend de préférence des moyens favorisant le contact entre la vapeur à condenser et le liquide destiné à être introduit par l'arrivée de liquide.

Le dispositif selon l'invention trouvent de multiples applications. Ainsi, il peut être utilisé comme réchauffeur d'un fluide quelconque ou comme condenseur de vapeur créée dans un évaporateur ; par ailleurs, l'une au moins des enceintes de ce dispositif peut faire partie d'un évaporateur, le fluide de condensation mis en oeuvre dans cette ou ces enceintes étant dans ce cas constitué par un produit liquide à concentrer par évaporation dans cet évaporateur.

La présente invention s'étend également à un évaporateur pour la concentration d'un produit liquide, comportant un circuit pour le produit liquide à concentrer en relation d'échange thermique indirect avec un circuit pour une vapeur de chauffage comprenant, outre d'éventuels incondensables, au moins deux constituants ayant des températures de condensation différentes, ce dernier circuit étant pourvu d'une sortie pour les condensats générés par la condensation partielle de la vapeur de chauffage et d'une sortie pour les incondensables et la vapeur de chauffage non condensée, cet évaporateur étant caractérisé en ce qu'il comprend en outre un dispositif de condensation conforme à celui décrit ci-dessus, la sortie pour les incondensables et la vapeur de chauffage non condensée étant en communication avec l'arrivée de vapeur de l'enceinte unique ou de la première des enceintes en série de ce dispositif.

Dans tout évaporateur de ce type, il est usuel d'extraire en continu une partie de la vapeur de chauffage et ce, dans le but d'éliminer les incondensables (constitués par les incondensables éventuellement présents dans la vapeur de chauffage et/ou pénétrant par des fuites dans le circuit pour la vapeur de chauffage) présents dans ce circuit pour la vapeur de chauffage et affectant les opérations d'évaporation. L'intérêt de mettre en oeuvre le dispositif de condensation précédemment décrit, est donc d'éviter de purement et simplement rejeter dans l'atmosphère la vapeur ainsi extraite simultanément avec les incondensables, c'est-à-dire de rejeter les calories véhiculées par cette vapeur.

On notera que la sortie pour les condensats de cet évaporateur est de préférence reliée, par l'intermédiaire éventuel de moyens de mise en circulation de liquide, à l'arrivée de liquide de l'enceinte unique ou de l'une des enceintes en série dudit dispositif.

Enfin, dans le cas où le dispositif de condensation comprend plusieurs enceintes en série, la sortie du circuit pour le produit liquide à concentrer peut être reliée, par l'intermédiaire éventuel de moyens de mise en circulation de liquide, à l'entrée du circuit de fluide de condensation de la première enceinte.

La présente invention est illustrée dans la description qui suit faite en regard des dessins annexés dans lesquels :

– la figure 1 est une représentation schématique d'un premier mode de réalisation du dispositif de condensation selon l'invention (vapeur et condensats circulant à contre-courant),

– la figure 2 est une représentation schématique d'un second mode de réalisation du dispositif de condensation selon l'invention (vapeur et condensats circulant à co-courant),

– la figure 3 est une représentation schématique d'un troisième mode de réalisation du dispositif de condensation selon l'invention (vapeur et liquide circulant en courant croisé), et

– la figure 4 est une représentation schématique d'un évaporateur associé à un dispositif de condensation comprenant plusieurs enceintes de condensation.

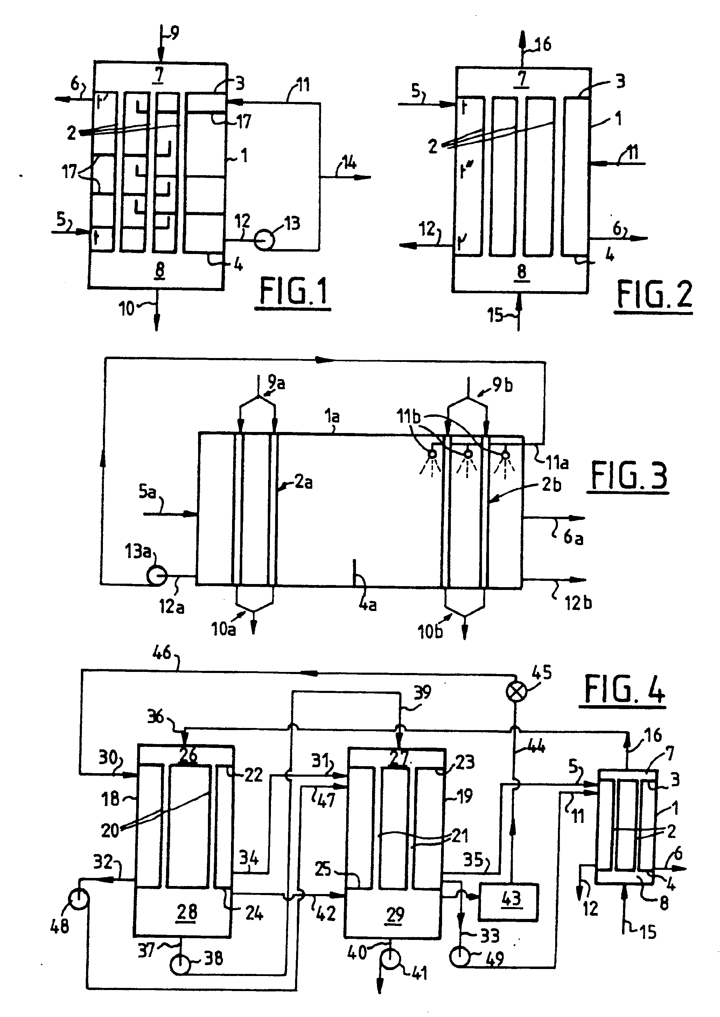

Comme le montrent les figures 1 et 2, le dispositif de condensation selon l'invention peut comprendre, de manière connue en soi, une enceinte 1, par exemple verticale, contenant une ou plusieurs surfaces d'échange thermique 2 ; dans l'exemple choisi, ces surfaces sont constituées par les tubes d'un faisceau tubulaire vertical dont les plaques tubulaires supérieure et inférieure sont respectivement référencées 3 et 4.

L'enceinte 1 comprend par ailleurs, une arrivée 5 de vapeur à condenser (par exemple un mélange de vapeur d'eau et de vapeur d'éthanol) et une sortie 6 de gaz et le faisceau tubulaire relie un compartiment supérieur 7 dont le fond est constitué par la plaque 3 à un compartiment inférieur 8 dont la paroi supérieure est constituée par la plaque 4.

Dans le mode de réalisation de la figure 1, l'arrivée 5 de vapeur à condenser est située à un niveau inférieur à celui de la sortie 6 de gaz ; ainsi l'arrivée 5 peut en particulier être située à l'extrémité basse de l'enceinte et la sortie 6 à l'extrémité haute de cette enceinte. De plus, le compartiment 7 est pourvu d'une arrivée 9 de fluide de condensation et le compartiment 8 est pourvu d'une sortie 10 de fluide de condensation.

Dans ces conditions, dans le dispositif illustré par la figure 1, la vapeur s'élève dans l'enceinte 1 en cédant ses calories au fluide de condensation ; il s'ensuit une condensation partielle ou totale de cette vapeur et un réchauffage du fluide de condensation avec formation d'un gradient de température de condensation de cette vapeur, décroissant de bas en haut dans ladite enceinte 1.

Sur la figure 1, la vapeur pénétrant dans l'enceinte 1 par l'arrivée 5 a une température de condensation t et au niveau de la sortie 6 la température de condensation est t' (t > t'). Les incondensables contenus dans la vapeur à condenser et la vapeur éventuellement non condensée s'échappent par la sortie 6 de gaz.

Conformément à l'invention, le dispositif de la figure 1 comprend en outre une arrivée 11 de liquide qui débouche de préférence dans la partie haute de l'enceinte ; l'enceinte 1 est par ailleurs pourvue d'une sortie 12 de liquide située à un niveau inférieur à l'arrivée 5 de vapeur.

Par l'arrivée 11, on introduit dans l'enceinte 1 un liquide choisi pour élever le profil de température de condensation de la vapeur sur une partie au moins du trajet de la vapeur à condenser entre son point d'introduction dans l'enceinte 1 (arrivée 5) et sa sortie de l'enceinte. Ce liquide sera choisi pour avoir, à la pression de condensation régnant dans l'enceinte 1, une température d'ébullition supérieure à t'.

Ledit liquide peut, dans l'exemple choisi (vapeur à condenser constituée par un mélange de vapeur d'eau et de vapeur d'éthanol), être de l'eau (constituant ayant la température de condensation la plus élevée) ou un mélange eau-éthanol dont la température d'ébullition répond à la condition sus-mentionnée. Ce mélange eau-éthanol peut en particulier avoir la même composition que les condensats qui se rassembleraient au bas de l'enceinte 1 en l'absence de liquide. Dans le cas de l'utilisation d'un tel mélange eau-éthanol, il est possible de prévoir une recirculation en raccordant la sortie 12 de liquide à l'arrivée 11 de liquide par l'intermédiaire d'une pompe de reprise 13 avec soutirage continu partiel de liquide par une dérivation 14 prévue sur l'arrivée 11.

Le mode de réalisation de la figure 2, comprend également une arrivée 11 de liquide et une sortie 12 de liquide ; cependant, l'arrivée 5 de vapeur à condenser est située à un niveau supérieur à celui de la sortie 6 de gaz ; en particulier, cette arrivée 5 est située à l'extrémité supérieure de l'enceinte 1 et la sortie 6 à l'extrémité inférieure de l'enceinte. En outre, le compartiment 8 est pourvu d'une arrivée 15 de fluide de condensation, le compartiment 7 est pourvu d'une sortie 16 de fluide de condensation, l'arrivée 11 de liquide débouche dans l'enceinte 1 en un point situé entre le point d'introduction de la vapeur dans l'enceinte et le point de sortie de la vapeur, c'est-à-dire entre l'arrivée 5 et la sortie 6 et la sortie 12 est située à un niveau inférieur à la sortie 6. Comme précédemment le liquide devra posséder une température d'ébullition supérieure à t' mais on préfère toutefois que sa température d'ébullition soit au moins égale à la température de condensation t'' (t > t'' > t') que possède, en l'absence dudit liquide, la vapeur au point prévu pour l'introduction du liquide dans l'enceinte 1 et ce, pour réaliser un relèvement des températures de condensation sur toute la zone située au-dessous dudit point d'introduction du liquide. Là encore, ledit liquide pourra être de même

nature que le constituant ayant la température de condensation la plus élevée c'est-à-dire de l'eau lorsque la vapeur à condenser est un mélange de vapeur d'eau et d'éthanol ou par un mélange eau-éthanol dont la température d'ébullition répond à la condition ci-dessus.

Ce second mode de réalisation est préféré au premier car les condensats, qui circulent à co-courant par rapport à la vapeur à condenser, ne subissent pas le phénomène de distillation désavantageux évoqué précédemment alors que dans le premier mode de réalisation les condensats, qui circulent à contre-courant par rapport à la vapeur, subissent un tel phénomène.

On préfère selon l'invention que les dispositifs décrits ci-dessus soient pourvus de moyens favorisant le contact entre le liquide amené par l'arrivée 11 et la vapeur à condenser. Ces moyens peuvent par exemple être constitués par un garnissage formant chicanes tels que des anneaux Raschig, remplissant, dans le cas du mode de réalisation de la figure 1 tout ou partie du volume libre de l'enceinte 1 et, dans le cas du mode de réalisation de la figure 2 tout ou partie du volume libre de la zone de l'enceinte 1, située au-dessous du point d'introduction du liquide.

En variante, ces moyens peuvent être constitués par des buses de pulvérisation disposées de manière appropriée dans l'enceinte 1.

Comme le montre la figure 1, ces moyens peuvent encore être constitués par deux rangées verticales d'augets 17 portés par la paroi verticale de l'enceinte 1, ces rangées étant imbriquées l'une dans l'autre de telle manière que chaque auget de l'une des rangées soit en chevauchement partiel avec l'auget, situé immédiatement en dessous, de l'autre rangée et l'auget occupant la position la plus haute dans l'enceinte étant situé à proximité du point où l'arrivée 11 débouche dans l'enceinte de manière à recevoir le liquide amené par cette arrivée. Grâce à cette disposition, le liquide s'écoule de haut en bas par déversement d'un auget à l'autre en créant une succession de rideaux de liquide traversés par la vapeur à condenser, ce qui assure un contact intime entre ce liquide et cette vapeur.

Les dispositifs ainsi décrits peuvent notamment être utilisés comme des réchauffeurs ou des corps d'évaporation, le fluide de condensation étant alors constitué respectivement par un fluide à réchauffer ou un produit à concentrer par évaporation. En outre, dans de telles applications, le liquide sera de préférence à une température au moins égale à la température de condensation de la vapeur à condenser entrant dans l'enceinte 1.

Le dispositif illustré par la figure 3 comprend une enceinte 1a sensiblement horizontale, contenant deux faisceaux tubulaires verticaux 2a, 2b, pourvus à leur extrémité supérieure d'un moyen 9a, 9b d'alimentation en fluide de condensation et à leur extrémité inférieure d'un moyen 10a, 10b d'évacuation de ce fluide de condensation.

L'une des parois latérales de l'enceinte 1a est pourvue d'une arrivée 5a de vapeur à condenser, la paroi latérale opposée étant pourvue d'une sortie 6a de gaz. Par ailleurs, l'enceinte 1a est pourvue d'une cloison verticale 4a qui prend naissance sur la paroi de fond 4b de l'enceinte 1a entre les deux faisceaux tubulaires 2a, 2b, la hauteur de cette cloison étant inférieure à celle de l'enceinte. Ladite cloison définit ainsi d'une part, une première zone de fond délimitée par le fond, la paroi avant et la paroi arrière de l'enceinte ainsi que par la paroi pourvue de l'arrivée 5a et d'autre part, une seconde zone de fond délimitée par le fond, la paroi avant et la paroi arrière de l'enceinte ainsi que par la paroi pourvue de l'arrivée 6a.

La vapeur à condenser circule donc, dans l'enceinte 1a, de la paroi pourvue de l'arrivée 5a vers la paroi pourvue de la sortie 6a. Au cours de son trajet, elle arrive d'abord au contact du faisceau 2a où elle se condense partiellement en générant des premiers condensats qui s'acheminent vers la première zone de fond de l'enceinte. De là, ces premiers condensats sont extraits par un conduit 12a relié à l'aspiration d'une pompe 13a. La vapeur à condenser restante parvient ensuite au contact du faisceau tubulaire 2b où elle continue à se condenser en générant des seconds condensats qui sont extraits de la seconde zone de fond de l'enceinte par des moyens d'extraction 12b.

Conformément à l'invention, le dispositif de la figure 3 comprend une arrivée 11a de liquide pourvue de moyens de pulvérisation 11b qui permettent d'amener le liquide pénétrant dans l'enceinte par ladite arrivée 11a, au contact de la vapeur à condenser parvenant jusqu'au faisceau tubulaire 2b. Comme le montre la figure 3, le refoulement de la pompe 13a est avantageusement en communication avec l'arrivée 11a de sorte que le liquide amené au contact de la vapeur soit constitué par les premiers condensats.

La figure 4 qui va maintenant être décrite, illustre l'une de applications possibles du dispositif de condensation selon l'invention, dans le domaine de l'évaporation.

L'évaporateur représenté par la figure 4 comprend deux enceintes 18, 19.

Chacune de ces enceintes comprend plusieurs surfaces d'échange thermique 20, 21 ; dans l'exemple choisi, ces surfaces se présentent sous la forme de faisceaux tubulaires verticaux dont les plaques tubulaires supérieure et inférieure sont référencées 22, 23 et 24, 25 respectivement.

Dans l'enceinte 18, 19, une chambre d'alimentation 26, 27 est ménagée au-dessus de la plaque tubulaire 22, 23 et une chambre d'extraction 28, 29 est ménagée au-dessous de la plaque tubulaire 24, 25, ces deux chambres étant ainsi reliées par le faisceau tubulaire. Le corps de chauffe défini par la plaque 22, 23, les parois verticales de l'enceinte 18, 19 et la plaque 24, 25 est pourvu d'une arrivée 30, 31 de vapeur de chauffage, d'une sortie 32, 33 de condensats et d'une sortie 34, 35 de vapeur, la sortie 34 de vapeur associée à l'enceinte 18 communiquant avec l'arrivée 31 de vapeur associée à l'enceinte 19.

L'évaporateur représenté comprend par ailleurs un circuit de produit liquide à concentrer, ce produit étant par exemple constitué par toute solution ou dispersion d'une substance solide dans un véhicule liquide formé par un mélange d'au moins deux constituants de volatilité différente, par exemple de l'eau et de l'éthanol, ce véhicule liquide contenant en outre d'éventuels incondensables dissous. Ce circuit comprend plus précisément, dans l'ordre suivant, une arrivée 36 de produit liquide débouchant dans la chambre d'alimentation 26 ; la surface intérieure des tubes du faisceau 20 ; la chambre d'extraction 28 ; un conduit 37 d'extraction du produit liquide concentré, prenant naissance dans la paroi de fonds de la chambre 28 et relié à l'aspiration d'une pompe 38 de reprise ; une arrivée 39 de liquide reliée au refoulement de la pompe 38 ; la chambre d'alimentation 27 ; l'intérieur des tubes 21 ; la chambre d'extraction 29 ; et un conduit 40 d'extraction de produit concentré prenant naissance dans la paroi de fonds de la chambre d'extraction 29 et relié à l'aspiration d'une pompe d'extraction 41.

L'évaporateur est en outre pourvu d'un circuit pour la vapeur de chauffage qui comprend dans l'ordre suivant, l'arrivée 30 de vapeur ; la surface extérieure des tubes 20 ; la sortie 34 de vapeur ; la surface extérieure des tubes 21 ; et la sortie 35 de vapeur.

L'évaporateur ainsi décrit fonctionne de la manière suivante.

Le produit liquide à concentrer pénétrant dans la chambre 26 est soumis à une évaporation à l'intérieur des tubes 20 sous l'effet des calories qui lui sont transmises par la vapeur de chauffage amenée par l'arrivée 30 de vapeur de chauffage.

Le produit concentré ainsi formé dans l'enceinte 18 et la vapeur générée par cette évaporation dans cette même enceinte 18 se retrouvent dans la chambre 28 de laquelle le produit concentré est extrait par les moyens 37, 38, la vapeur générée étant pour sa part amenée dans la chambre 29 par un conduit 42 faisant communiquer les chambres 28 et 29.

Le produit concentré est ensuite amené dans l'enceinte 19 par les moyens 37, 38 et 39 et la vapeur générée dans cette même enceinte 19 se retrouvent dans la chambre 29 de laquelle le produit concentré est soutiré par les moyens d'extraction 40, 41, la vapeur générée mélangée à celle provenant de la chambre 28 étant amenées dans un séparateur liquide-vapeur 43 dont la partie haute est reliée, par un conduit 44, à l'aspiration d'un compresseur de vapeur 45, par exemple un compresseur mécanique ou un éjecto-compresseur, le refoulement de ce compresseur communiquant par l'intermédiaire d'un raccord 46, avec l'arrivée 30 de vapeur.

La vapeur générée dans les tubes 20, 21 est dans ces conditions amenée à un niveau thermique supérieur avant d'être amenée dans le corps de chauffe de l'enceinte 18.

Le véhicule liquide du produit à concentrer étant constitué par un mélange d'au moins deux constituants de volatilité différente (eau et éthanol par exemple) et d'éventuels incondensables, on retrouve ces constituants et ces éventuels incondensables dans la vapeur générée par l'évaporation dans les tubes 20, 21.

En cédant une partie de ses calories au produit liquide à concentrer pénétrant dans l'enceinte 18, la vapeur de chauffage amenée par l'arrivée 30, se trouve partiellement condensée (en eau et éthanol liquides) tout en s'enrichissant en constituant ayant la température de condensation la plus faible (éthanol). La vapeur ainsi enrichie en éthanol, parvient ensuite, via la sortie 34 et l'entrée 31, dans le corps de chauffe de l'enceinte 19 où elle subit une nouvelle condensation partielle.

L'enceinte 18 et les différents éléments qui lui sont associés ainsi que l'enceinte 19 et les différents éléments qui lui sont associés, sont des dispositifs de condensation. Le dernier au moins de ces dispositifs peut être modifié pour le rendre conforme au dispositif de condensation selon l'invention. Pour ce faire, on prévoit, comme le montre la figure 4, l'entrée 31 de vapeur à la partie haute du corps de chauffe de l'enceinte 19 et la sortie 35 de vapeur à la partie basse de ce même corps de chauffage afin que la vapeur circule dans ce dernier dans le même sens que les condensats formés, c'est-à-dire de haut en bas. On peut si on le désire prévoir la même disposition relative pour l'entrée 30 de vapeur et la sortie 34 de vapeur, ce qui est d'ailleurs illustré par la figure 4.

Par ailleurs, on prévoit également une arrivée 47 de liquide à la partie haute du corps de chauffe de l'enceinte 19, cette arrivée étant reliée par l'intermédiaire d'une pompe de reprise 48 à la sortie 32 de condensats de l'enceinte 18. On dispose enfin dans le corps de chauffe de l'enceinte 19, des moyens favorisant le contact entre la vapeur et ledit liquide, ces moyens pouvant être de même conception que ceux décrits précédemment en relation avec la figure 1. Grâce à la mise en oeuvre de ces éléments supplémentaires, on parvient à relever le profil des températures de condensation au sein du corps de chauffe de l'enceinte 19 ; il s'ensuit un meilleur échange thermique dans l'enceinte 19 et donc une meilleure évaporation du produit liquide à concentrer.

L'évaporateur qui vient d'être décrit est complété par un dispositif de condensation complémentaire ayant la même structure que le dispositif objet de la figure 2. Ce dispositif complémentaire comprend donc les mêmes moyens que ceux référencés 1 à 8, 11, 12, 15 et 16 sur la figure 2, la seule différence étant que l'arrivée 11 de liquide débouche dans la partie supérieure de l'enceinte 1 et que cette enceinte contient des moyens pour favoriser le contact vapeur/liquide. En outre, l'arrivée 5 de vapeur est reliée à la sortie 35 de l'enceinte 19, l'arrivée 11 de liquide est reliée à la sortie 33 de condensats de l'enceinte 19, par l'intermediaire d'une pompe de reprise 49, l'arrivée 15 de fluide de condensation est reliée à une source de produit liquide à concentrer (non représentée) et la sortie 16 de fluide est reliée à l'arrivée 36 de produit liquide à concentrer.

Ainsi la vapeur non condensée dans le corps de chauffe de l'enceinte 19 et les incondensables qu'elle contient, ces derniers provenant de fuites au niveau des corps de chauffe des enceintes 18 et 19 et éventuellement de la vapeur de chauffage mise en oeuvre sont amenés, via la sortie 35 et l'entrée 5, dans l'enceinte 1 du dispositif de condensation complémentaire où ils sont mis en contact avec les condensats amenés par la sortie 33 et l'arrivée 11. Sous l'effet du fluide de condensation (produit liquide à concentrer) pénétrant dans ce dispositif par l'arrivée 15, la vapeur se trouve condensée ; du fait du contact réalisé entre la vapeur et lesdits condensats, on évite dans une large mesure l'apparition d'un gradient de température de condensation décroissant de l'arrivée 5 à la sortie 6, gradient qui serait responsable d'une baisse de performance du dispositif de condensation. D'autre part, le produit liquide à concentrer pénétrant dans l'enceinte 1 par l'arrivée 15 se trouve préchauffé dans cette enceinte avant son évaporation dans les enceintes 18 et 19.

## Revendications

1. Procédé de condensation d'une vapeur comprenant, outre d'éventuels incondensables, au moins deux constituants ayant des températures de condensation différentes à la pression de condensation considérée, tels que l'eau et l'éthanol, qui consiste à faire circuler la vapeur en continu à travers une zone de condensation et à réaliser dans cette zone un échange thermique indirect entre cette vapeur et au moins un fluide de condensation, caractérisé en ce que l'on introduit et extrait en continu un liquide dans la zone de condensation de manière à ce que ladite vapeur soit amenée au contact de ce liquide dans une partie au moins de ladite zone, ce dernier étant miscible avec les condensats générés par la condensation de la vapeur et possedant, à la pression de condensation considérée, une température d'ébullition supérieure à la température de condensation la plus basse que possède la vapeur dans ladite zone de condensation en l'absence dudit liquide, pour élever la température de condensation de la vapeur sur une partie au moins du trajet de cette vapeur dans la zone de condensation

2. Procédé selon la revendication 1, caractérisé en ce que le liquide est constitué par l'un au moins des constituants de la vapeur.

3. Procédé selon la revendication 2, caractérisé en ce que le liquide est de même nature que le constituant de la vapeur à condenser ayant la température de condensation la plus élevée.

4. Procédé selon la revendication 2 caractérisé en ce que le liquide comprend les mêmes constituants dans la vapeur, la teneur de ces constituants dans le liquide étant telle que ce dernier possède, à la pression de condensation considérée, une température d'ébullition supérieure à la température de condensation la plus basse que possède la vapeur dans ladite zone de condensation en l'absence dudit liquide.

5. Procédé selon l'une des revendications précédentes, caractérisé en ce que l'on fait circuler la vapeur, sur une partie au moins de son trajet dans la zone de condensation, à contre-courant par rapport aux condensats générés par sa condensation.

6. Procédé selon la revendication 5, caractérisé en ce que ledit liquide est constitué par tout ou partie des condensats présents en un point quelconque de la zone de condensation, situé à un niveau inférieur au point d'introduction du liquide dans ladite zone.

7. Procédé selon l'une des revendications 1 à 4, caractérisé en ce que l'on fait circuler la vapeur, sur une partie au moins de son trajet dans la zone de condensation, dans le sens de cheminement des condensats générés par sa condensation.

8. Procédé selon la revendication 7, caractérisé en ce que la température d'ébullition du liquide est égale ou supérieure à la température de condensation que possède la vapeur au point d'introduction du liquide dans la zone de condensation.

9. Dispositif de condensation pour la mise en oeuvre du procédé selon l'une des revendications précédentes, qui comprend une enceinte unique (1 ; 1a) ou plusieurs enceintes en séries (19, 1), chaque enceinte comportant (i) une arrivée (5 ; 5a ; 31, 5) de vapeur à condenser, (ii) une sortie (6 ; 6a ; 35, 6) de gaz et (iii) au moins un circuit (9, 7, 2, 8, 10 – figure 1 ; 15, 8, 3, 7, 16 – figure 2 ; 9a, 2a, 10a, et 9b, 2b, 10b – figure 3 ; 39, 27, 21, 29 – figure 4) de fluide de condensation en relation d'échange thermique indirect avec la vapeur à condenser, la sortie (35) de gaz de chacune des enceintes en série, à l'exception de la dernière, étant en communication avec l'arrivée (5) de vapeur à condenser de l'enceinte suivante, caractérisé en ce que l'enceinte unique ou l'une au moins des enceintes en série est pourvue d'au moins une arrivée (11 ; 11a.; 47) d'un liquide tel que défini dans les revendicatons précédentes et d'une sortie (12 ; 12b ; 33) pour ce liquide et pour les condensats destinés à se former dans l'enceinte considérée, les positions respectives de cette arrivée et de cette sortie étant telles que ledits liquide soit amené au contact de la vapeur à condenser dans une partie au moins de l'enceinte considérée.

10. Dispositif selon la revendication 9, caractérisé en ce que ladite arrivée (11 ; 11a ; 47) de liquide est disposée dans un plan situé au-dessus du plan dans lequel est disposées ladite sortie 12 ; 12b ; 33) pour le liquide et les condensats de l'enceinte considérée.

11. Dispositif selon la revendication 9 et 10, caractérisé en ce que l'arrivée (5 – figure 1) de vapeur à condenser de l'enceinte unique ou de l'une au moins des enceintes en série est disposée dans un plan situé en-dessous du plan dans lequel est disposée la sortie (6 – figure 1) de gaz de l'enceinte considérée.

12. Dispositif selon la revendication 11, caractérisé en ce que la sortie (12) pour le liquide et les condensats de l'enceinte unique ou de l'une au moins des enceintes en série est reliée à l'arrivée (11) de liquide de l'enceinte considérée par l'intermédiaire éventuel de moyens (13) de mise en circulation du liquide.

13. Dispositif selon la revendicaton 9 ou 10, caractérisé en ce que l'arrivée (5 – figure 2 ; 31 – figure 4) de vapeur à condenser de l'enceinte unique ou de l'une des enceintes en série est disposée dans un plan situé au-dessus du plan lequel est disposée la sortie (6 – figure 2 ; 35 – figure 4) de gaz de l'enceinte considérée.

14. Dispositif selon la revendication 9 ou 10, caractérisé en ce que les positions respectives de l'arrivée (5a) de vapeur à condenser et de la sortie (6a) de gaz sont telles que, dans l'enceinte unique ou l'une au moins des enceintes en séries, le courant de vapeur à condenser et celui du liquide sont croisés.

15. Dispositif selon la revendication 14, dans lequel l'enceinte unique ou l'une au moins des enceintes en série comprend plusieurs circuits (9a, 2a, 10a; 9b, 2b, 10b) de fluide de condensation, caractérisé en ce que ces circuits sont disposés successivement sur le trajet de la vapeur à condenser dans l'enceinte considéré.

16. Dispositif selon l'une des revendications 9 à 11 et 13 à 15, comprenant plusieurs enceintes en série (19, 1), caractérisé en ce que la sortie (33) pour le liquide et les condensats de l'une (19) au moins des enceintes, à l'exception de la dernière, est en communication avec l'arrivée (11) de liquide de l'une au moins des enceintes suivantes par l'intermédiaire éventuel de moyens de mise en circulation du liquide.

17. Dispositif selon l'une des revendications 9 à 16, caractérisé en ce que l'enceinte unique ou l'une au moins des enceintes en série pourvues de ladite arrivée de liquide et de ladite sortie pour le liquide et les condensats, comprend des moyens (17) favorisant le contact entre la vapeur à condenser et le liquide destiné à être introduit par l'arrivée de liquide.

18. Dispositif selon l'une des revendications 9 à 17, caractérisé en ce que l'une (19) au moins des enceintes fait partie d'un évaporateur, le fluide de condensation mis en oeuvre dans cette ou ces enceintes étant constitué par un produit liquide à concentrer par évaporation dans cet évaporateur.

19. Evaporateur pour la concentration d'un produit liquide, comportant un circuit (36, 26, 20, 28) pour le produit liquide à concentrer en relation d'échange thermique indirect avec un circuit (30, 34) pour une vapeur de chauffage comprenant, outre d'éventuels incondensables, au moins deux constituants ayant des températures de condensation différentes, ce dernier circuit étant pourvu d'une sortie (32) pour les condensats générés par la condensation partielle de la varpeur de chauffage et d'une sortie (34) pour les incondensables et la vapeur de chauffage non condensée, caractérisé en ce qu'il comprend en outre un dispositif de condensation selon l'une des revendications 9 à 18, ladite sortie pour les incondensables et la vapeur de chauffage non condensée étant en communication avec l'arrivée (31) de vapeur de l'enceinte unique ou de la première (19) des enceintes en série de ce dispositif.

20. Evaporateur selon la revendication 19, caractérisé en ce que sa sortie (32) pour les condensats est reliée, par l'intermédiaire éventuel de moyens (48) de mise en circulation de liquide, à l'arrivée (47) de liquide de l'enceinte unique ou de l'une des enceintes en série dudit dispositif.

21. Evaporateur selon la revendication 19 ou 20, dans lequel le dispositif de condensation comprend plusieurs enceintes en série (19, 1), caractérisé en ce que la sortie du circuit pour le produit liquide à concentrer est reliée, par l'intermédiaire éventuel de moyens (37, 38) de mise en circulation de liquide, à l'entrée (39) du circuit de fluide de condensation de la première enceinte (19).

## Ansprüche

1. Verfahren zum Kondensieren eines Dampfes mit, neben eventuellen unkondensierbaren Bestandteilen, wenigstens zwei Bestandteilen, die unterschiedliche Kondensationstemperaturen bei dem betrachteten Kondensationsdruck aufweisen, wie beispielsweise das Wasser und das Ethanol, das darin besteht, den Dampf kontinuierlich über eine Kondensationszone zirkulieren zu lassen und in dieser Zone einen indirekten Wärmeaustausch zwischen diesem Dampf und wenigstens einem Kondensationsfluid zu erzeugen, **dadurch gekennzeichnet,** daß kontinuierlich eine Flüssigkeit in die Kondensationszone derart ein- und ausgeführt wird, daß der Dampf in Kontakt mit dieser Flüssigkeit wenigstens in einem Bereich der genannten Zone gebracht wird, wobei dieser Letztere mit den durch die Dampfkondensation erzeugten Kondensaten mischbar ist und bei dem betrachteten Kondensationsdruck eine Siedetemperatur aufweist, die höher ist als die allerunterste Kondensationstemperatur, die der Dampf in der genannten Kondensationszone unter Abwesenheit der Flüssigkeit hat/ um die Kondensationstemperatur des Dampfes auf wenigstens einem Bereich des Weges des Dampfes in der Kondensationszone anzuheben.

2. Verfahren nach Anspruch 1, **dadurch gekennzeichnet**, daß die Flüssigkeit gebildet ist aus wenigstens einem der Bestandteile des Dampfes.

3. Verfahren nach Anspruch 2, **dadurch gekennzeichnet**, daß die Flüssigkeit von dieselben Natur ist, wie der Bestandteil des zu kondensierenden Dampfes, der die höchste Kondensationstemperatur aufweist.

4. Verfahren nach Anspruch 2, **dadurch gekennzeichnet**, daß die Flüssigkeit dieselben Bestandteile wie der Dampf aufweist, wobei der Gehalt dieser Bestandteile in der Flüssigkeit derselbe ist, wie letztere bei dem betrachteten Kondensationsdruck aufweist, eine Siedetemperatur aufweist, die größer ist als die unterste Kondensationstemperatur, die der Dampf in der Kondensationszone unter Abwesenheit der Flüssigkeit hat.

5. Verfahren nach einem der vorhergehenden Ansprüche, **dadurch gekennzeichnet**, daß wenigstens auf einem Bereich seines Weges in der Kondensationszone der Dampf im Gegenstrom bezüglich der durch seine Kondensation erzeugten Kondensate zirkuliert wird.

6. Verfahren nach Anspruch 5, **dadurch gekennzeichnet**, daß die genannte Flüssigkeit ganz oder teilweise aus den Kondensaten gebildet wird, die an irgendeinem Punkt der Kondensationszone vorliegen, der auf einem niedrigeren Niveau bezüglich des Zuführungspunktes der Flüssigkeit in die genannte Zone angeordnet ist.

7. Verfahren nach einem der Ansprüche 1 bis 4, **dadurch gekennzeichnet**, daß der Dampf auf einem Bereich seines Weges in der Kondensationszone zirkuliert wird, in Richtung des Fortschreitens der durch seine Kondensation erzeugten Kondensate.

8. Verfahren nach Anspruch 7, **dadurch gekennzeichnet**, daß die Siedetemperatur der Flüssigkeit gleich oder größer ist als die Kondensationstemperatur, die der Dampf im Zuführungspunkt der Flüssigkeit in die Kondensationszone aufweist.

9. Kondesationsvorrichtung für die Durchführung des Verfahrens nach einem der vorhergehenden Ansprüche, die eine einzige Einfassung (1 ; 1a) oder mehrere Einfassungen in Reihe (19, 1) aufweist, wobei jede Einfassung (i) eine Zuführung (5 ; 5a ; 31,5) des zu kondensierenden Dampfes, (ii) eine Abführung (6 ; 6a, 35,6) von Gas und (iii) wenigstens einen Kondensationsflüssigkeitskreis (9, 7, 2, 8, 10 –

Fig. 1 ; 15, 8, 3, 7, 16 – Fig. 2 ; 9a, 2a, 10a und 9b, 2b, 10b – Fig. 3 ; 39, 27, 21, 29 – Fig. 4) aufweist im indirekten Wärmeaustauschverhältnis mit dem zu kondensierenden Dampf, wobei der Gasausgang (35) einer jeden Einfassung in Reihe, mit Ausnahme der letzten, in Verbindung steht mit der Zuführung (5) des zu kondensierenden Dampfes der nachfolgenden Einfassung, **dadurch gekennzeichnet**, daß die einzelne Einfassung oder wenigstens eine der Einfassungen in Reihe wenigstens mit einer Zuführung (11 ; 11a ; 47) einer Flüssigkeit versehen ist, wie diese in den vorhergehenden Ansprüchen definiert ist, und mit einer Abführung (12 ; 12b ; 33) für diese Flüssigkeit und für die Kondensate versehen ist, die dazu bestimmt sind, sich in der betrachteten Einfassung zu bilden, wobei die entsprechenden Positionen dieser Zuführung und dieser Abführung derart sind, daß die Flüssigkeit in Kontakt mit dem zu kondensierenden Dampf, wenigstens in einem Bereich der betrachteten Einfassung gebracht wird.

10. Vorrichtung nach Anspruch 9, **dadurch gekennzeichnet**, daß die genannte Zuführung (11 ; 11a ; 47) der Flüssigkeit in einer Ebene angeordnet ist, die oberhalb der Ebene angeordnet ist, in der die genannte Abführung (12 ; 12b ; 33) für die Flüssigkeit und die Kondensate in der betrachteten Einfassung angeordnet ist.

11. Vorrichtung nach Anspruch 9 oder 10, **dadurch gekennzeichnet**, daß die Zuführung (5 – Fig. 1) des zu kondensierenden Dampfes der einzigen Einfassung oder wenigstens einer der Einfassungen in Reihe in einer Ebene angeordnet ist, die unterhalb der Ebene angeordnet ist, in der der Ausgang (6 – Fig. 1) des Gases in der betrachteten Einfassung angeordnet ist.

12. Vorrichtung nach Anspruch 11, **dadurch gekennzeichnet**, daß die Abführung (12) für die Flüssigkeit und die Kondensate der einzigen Einfassung oder wenigstens der einen der Einfassungen in Reihe mit der Zuführung (11) der Flüssigkeit der betrachteten Einfassung gegebenenfalls mittels Einrichtungen (13) zum Zirkulationsantrieb der Flüssigkeit verbunden ist.

13. Vorrichtung nach Anspruch 9 oder 10, **dadurch gekennzeichnet**, daß die Zuführung (5 – Fig. 2 ; 31 – Fig. 4) des zu kondensierenden Dampfes der einzigen Einfassung oder der wenigstens einen der Einfassungen in Reihe in einer Ebene angeordnet ist, die oberhalb der Ebene angeordnet ist, in der die Abführung (6 – Fig. 2 ; 35 – Fig. 4) der Gase der betrachteten Einfassung angeordnet ist.

14. Vorrichtung nach Anspruch 9 oder 10, **dadurch gekennzeichnet**, daß die entsprechenden Positionen der Zuführung (5a) des zu kondensierenden Dampfes und der Abführung (6a) der Gase derart sind, daß in der einzigen Einfassung oder in wenigstens einer der Einfassungen in Reihe der Strom des zu kondensierenden Dampfes und jener der Flüssigkeit gekreuzt sind.

15. Vorrichtung nach Anspruch 14, in der die einzige Einfassung oder die wenigstens eine der Einfassungen in Reihe mehrere Kondensationsflüssigkeitskreise (9a, 2a, 10a ; 9b, 2b, 10b) aufweisen, **dadurch gekennzeichnet**, daß diese Kreise aufeinanderfolgend auf dem Weg des zu kondensierenden Dampfes in der betrachteten Einfassung angeordnet sind.

16. Vorrichtung nach einem der Ansprüche 9 bis 11 und 13 bis 15, mit mehreren Einfassungen in Reihe (19, 1), **dadurch gekennzeichnet**, daß die Abführung (33) für die Flüssigkeit und die Kondensate der wenigstens einen (19) der Einfassungen, mit Ausnahme der letzten, in Verbindung steht mit der Flüssigkeitszuführung (11) der wenigstens einen nachfolgenden Einfassungen gegebenenfalls über Einrichtungen zum Zirkulationsantrieb der Flüssigkeit.

17. Vorrichtung nach einem der Ansprüche 9 bis 16, **dadurch gekennzeichnet**, daß die einzige Einfassung oder die wenigstens eine der Einfassungen in Reihe, die mit der genannten Flüssigkeitszuführung und der genannten Abführung für die Flüssigkeit und die Kondensate Einrichtungen (17) aufweist, die den Kontakt zwischen dem zu kondensierenden Dampf und der Flüssigkeit begünstigen, die dazu bestimmt ist, durch die Flüssigkeitszuführung eingebracht zu werden.

18. Vorrichtung nach einem der Ansprüche 9 bis 17, **dadurch gekennzeichnet**, daß die wenigstens eine (19) der Einfassungen Teil eines Evaporators ist, wobei das Kondensationsfluid, das in dieser oder diesen Einfassungen gebildet wird, aus einem flüssigen Produkt zur Konzentrierung durch Verdampfung in diesem Evaporator gebildet ist.

19. Evaporator für die Konzentration eines flüssigen Produktes, mit einem Kreis (36, 26, 20, 28) für das zu konzentrierende flüssige Produkt durch indirekten Wärmeaustausch mit einem Kreis (30, 34) für einen Heizdampf, der neben eventuellen unkondensierbaren Stoffen wenigstens zwei Bestandteile aufweist, die unterschiedliche Kondensationstemperaturen aufweisen, wobei der letztere Schaltkreis mit einer Abführung (32) für die erzeugten Kondensate versehen ist, die durch teilweise Kondensation des Heizdampfes erfolgte, und mit einer Abführung (34) für die nicht-kondensierbaren Stoffe und dem nicht-kondensierten Heizdampf versehen ist, **dadurch gekennzeichnet**, daß er weiterhin eine Kondensationsvorrichtung nach einem der Ansprüche 9 bis 18 aufweist, bei der die Abführung für die nicht-kondensierbaren Stoffe und den nicht-kondensierten Heizdampf in Verbindung steht mit der Zuführung (31) des Dampfes der einzigen Einfassung oder der ersten (19) der Einfassungen in Reihe dieser Vorrichtung.

20. Evaporator nach Anspruch 19, **dadurch**

**gekennzeichnet**, daß die Abführung (32) für die Kondensate gegebenenfalls mittels bzw. Über Einrichtungen (48) für das Inzirkulationversetzen der Flüssigkeit mit der Zuführung (47) der Flüssigkeit der einzigen Einfassung oder der einen der Einfassungen in Reihe der genannten Vorrichtung verbunden ist.

21. Evaporator nach Anspruch 19 oder 20, in dem die Kondensationsvorrichtung mehrere Einfassunen in Reihe (19, 1) aufweist, **dadurch gekennzeichnet**, daß die Abführung des Kreises für das zu konzentrierende flüssige Produkt gegebenenfalls über Einrichtungen (37, 38) für das Inzirkulationversetzen der Flüssigkeit mit der Zuführung (39) des Kreises der Kondensationsflüssigkeit der ersten Einfassung (19) verbunden ist.

## Claims

1. Process for condensing a vapour comprising, besides possible incondensibles, at least two constituents having different condensation temperatures at the condensation pressure under consideration, such as water and ethanol, which consists of making the vapour circulate continuously through a condensation zone and of producing in this zone an indirect thermal exchange between this vapour and at least one condensation fluid, characterised in that there is continuously introduced and extracted a liquid in the condensation zone, in such a way that the said vapour is brought in contact with this liquid in at least one part of the said zone, the latter being miscible with the condensates generated by the condensation of the vapour and having at the condensation pressure under consideration, a boiling temperature which is higher than the lowest condensation temperature which the vapour possesses in the said condentation zone in the absence of the said liquid, in order to raise the condensation temperature of the vapour over at least one part of the path of this vapour in the condensation zone.

2. Process as claimed in claim 1, characterised in that the liquid is composed of at least one of the constituents of the vapour.

3. Process as claimed in Claim 2, characterised in that the liquid is of the same nature as the constituent of the vapour being condensed which has the highest condensation temperature.

4. Process as claimed in Claim 2, characterised in that the liquid comprises the same constituents as the vapour, the amount of these constituents in the liquid being such that the latter possesses at the condensation pressure under consideration, a boiling temperature which is higher than the lowest condensation temperature which the vapour possesses in the said condensation zone in the absence of the said liquid.

5. Process as claimed in one of the preceding claims, characterised in that the vapour is made to circulate over at least one part of its path in the condensation zone, in counter-flow in relation to the condensates generated by its condensation.

6. Process as claimed in Claim 5, characterised in that the said liquid is composed of all or part of the condensates present at some point of the condensation zone which is situated at a lower level than the point of introduction of the liquid into the said zone.

7. Process as claimed in one of the Claims 1 to 4, characterised in that the vapour is made to circulate over at least one part of its course in the condensation zone in the direction of advance of the condensates generated by its condensation.

8. Process as claimed in Claim 7, characterised in that the boiling temperature of the liquid is equal to or higher than the condensation temperature which the vapour possesses at the point of introduction of the liquid into the condensation zone.

9. Condensation device for putting into practice the process as claimed in one of the preceding claims, which comprises a single enclosure (1 ; 1a) or several enclosures in series (19,1), each enclosure comprising (i) an inlet (5 ; 5a ; 31,5) for vapour to be condensed, (ii) a gas outlet (6 ; 6a ; 35, 6) and (iii) at least one circuit (9, 7, 2, 8, 10 – Figure 1 ; 15, 8, 3, 7, 16 – Figure 2 ; 9a, 2a, 10a and 9b, 2b, 10b – Figure 3 ; 39, 27, 21, 29 – Figure 4) for condensation fluid in indirect thermal exchange relationship with the vapour to be condensed, the gas outlet (35) of each of the enclosures in series, with the exception of the last, being in communication with the outlet (5), for vapour to be condensed, of the succeeding enclosure, characterised in that the single enclosure or at least one of the enclosures in series is provided with at least one inlet (11 ; 11a ; 47) for a liquid such as defined in the preceding claims, and with an outlet (12 ; 12b ; 33) for this liquid and for the condensates which are intended to form in the enclosure under consideration, the respective positions of this inlet and this outlet being such that the said liquid is brought in contact with the vapour being condensed, in at least one part of the enclosure under consideration.

10. Device as claimed in Claim 9, characterised in that the said liquid inlet (11 ; 11a ; 47) is arranged in a plane which is situated above the plane in which is arranged the said outlet (12 ; 12b ; 33) for the liquid and the condensates of the enclosure under consideration.

11. Device as claimed in Claim 9 or Claim 10, characterised in that the inlet (5 – Figure 1) for vapour to be condensed, of the single enclosure or of at least one of the enclosures in series is arranged in a plane which is situated below the plane in which is arranged the gas outlet (6 – Figure 1) of the enclosure under consideration.

12. Device as claimed in Claim 11, characterised in that the outlet (12) for the liquid and the condensates of the single enclosure or at least one of the enclosures in series is connected to the liquid inlet (11) of the enclosure under consideration through the possible intermediary of means (13) for making the liquid circulate.

13. Device as claimed in Claim 9 or Claim 10, characterised in that the inlet (5 – Figure 2 ; 31 – Figure 4) for vapour being condensed, of the single enclosure or of at least one of the enclosures in series is arranged in a plane which is situated above the plane in which is arranged the gas outlet (6 – Figure 2 ; 35 – Figure 4) of the enclosure under consideration.

14. Device as claimed in Claim 9 or Claim 10, characterised in that the respective positions of the inlet (5a) for vapour being condensed and of the gas outlet (6a) are such that the current of vapour being condensed and that of the liquid are crossed in the single enclosure or at least one of the enclosures in series.

15. Device as claimed in Claim 14, in which the single enclosure or at least one of the enclosures in series comprises several condensation fluid circuits (9a, 2a, 10a ; 9b, 2b, 10b), characterised in that these circuits are arranged in succession in the path of the vapour being condensed in the enclosure under consideration.

16. Device as claimed in one of the Claims 9 to 11 and 13 to 15, comprising several enclosures in series (19,1), characterised in that the outlet (33) for the liquid and the condensates of at least one (19) of the enclosures, with the exception of the last, is in communication with the liquid inlet (11) of at least one of the succeeding enclosures through the possible intermediary of means for making the liquid circulate.

17. Device as claimed in one of the Claims 9 to 16, characterised in that the single enclosure or at least one of the enclosures in series provided with the said liquid inlet and the said outlet for the liquid and the condensates comprises means (17) which promote contact between the vapour being condensed and the liquid which is intended to be introduced through the liquid inlet.

18. Device as claimed in one of the Claims 9 to 17, characterised in that at least one (19) of the enclosures forms part of an evaporator, the condensation fluid used in this enclosure or these enclosures being composed of a liquid product being concentrated by evaporation in this evaporator.

19. Evaporator for the concentration of a liquid product, comprising a circuit (36, 26, 20, 28) for the liquid product to be concentrated in indirect thermal exchange relationship with a circuit (30, 34) for a heating vapour comprising, besides any possible incondensibles, at least two constituents having different condensation temperatures, this latter circuit being provided with an outlet (32) for the condensates generated by the partial condensation of the heating vapour and with an outlet (34) for the incondensibles and the uncondensed heating vapour, characterised in that it also comprises a condensation device as claimed in one of the Claims 9 to 18, the said outlet for the incondensibles and the uncondensed heating vapour being in communication with the vapour inlet (31) of the single enclosure or of the first (19) of the enclosures in series, of this device.

20. Evaporator as claimed in Claim 19, characterised in that its outlet (32) for the condensates is connected, by the possible intermediary of means (48) for making liquid circulate, to the liquid inlet (47) of the single enclosure or of one of the enclosures in series, of the said device.

21. Evaporator as claimed in Claim 19 or Claim 20, in which the condensation device comprises several enclosures in series (19, 1), characterised in that the outlet of the liquid being concentrated is connected, by the possible intermediary of means (37, 38) for making liquid circulate, to the inlet (39) of the condensation fluid circuit of the first enclosure (19).

FIG.1

FIG.2

FIG.3

FIG.4